# EUROPÄISCHE PATENTSCHRIFT

(11) **EP 1 014 479 B1**
(45) Veröffentlichungstag und Bekanntmachung des Hinweises auf die Patenterteilung: **16.02.2005**
(21) Anmeldenummer: 98124630.9
(22) Anmeldetag: 23.12.1998
(51) Int. Cl.: H01Q 1/32, H01Q 7/00

(54) **Antennenanordnung für schlüssellose Benutzung eines Fahrzeuges**
Antenna arrangement for the keyless use of a vehicle
Arrangement d'antennes pour utilisatiion d'un véhicule sans clés

(43) Veröffentlichungstag der Anmeldung: 28.06.2000
(73) Patentinhaber: Ford Global Technologies, Inc., A subsidiary of Ford Motor Company, Dearborn, Michigan 48126 (US)
(72) Erfinder: Schulz, Martin, 50181 Bedburg (DE)
(74) Vertreter: Drömer, Hans-Carsten, Dipl.-Ing.

(56) Entgegenhaltungen:
- FR-A- 2 749 607
- US-A- 4 755 823
- US-A- 4 873 530
- US-A- 5 134 392

## Beschreibung

Schlüssellose Zugangssysteme für Fahrzeuge sollen das Öffnen und Schließen des Fahrzeuges, also die Betätigung der Zentralverriegelung ohne Benutzung eines mechanischen Schlüssels ermöglichen. Das Drehen des Schlüssels entfällt. Ebenso entfällt die Betätigung einer Taste an einer Fernbedienung. Stattdessen trägt der Benutzer einen elektronischen Ausweis mit sich. Dieser Ausweis weist eine Kodierung auf, die von einer elektronischen Baueinheit im Fahrzeug mittels drahtloser Kommunikation ermittelt werden kann.

Um den Zugang zum Fahrzeug zu ermöglichen ist eine bidirektionale Datenübertragung zwischen Benutzer und Fahrzeug nötig. Das Problem dabei ist, daß eine zuverlässige Erkennung des Ausweises sowohl außerhalb des Fahrzeuges für den Zugang als auch innerhalb des Fahrzeuges für das Starten des Fahrzeuges erforderlich ist. Insbesondere letztere Funktion muß aus Sicherheitsgründen räumlich eng begrenzt sein, da sonst das Fahrzeug gestartet werden könnte, obwohl der Benutzer nicht im Fahrzeug ist. Auch die Öffnung der Türen oder des Kofferraumes darf nur möglich sein, wenn der Benutzer nit dem Ausweis in unmittelbarer Nähe des Fahrzeuges ist, weil sonst die Gefahr eines Zugangs durch Unberechtigte entsteht.

Aus DE 195 42 441 A1 ist eine Antennenvorrichtung für einen Diebstahlschutzsystem bekannt, bei der mehrere Scheibenantennen im Fahrzeug angebracht sind. Die einzelne Antennenvorrichtung besteht zumindest aus einem Paar von räumlich voneinander getrennten Einzelantennen. Die Einzelantennen sollen möglichst dicht nebeneinander liegen und beispielsweise mit einer Phasenverschiebung mit einem Phasenwinkel von 45° angesteuert werden. Hierdurch entstehen rotierende sich überlagernde Magnetfelder. Mehrere Antennenvorrichtungen können z.B. in den Türen der Hutablage und der Heckklappe angebracht sein. Die Antennenvorrichtungen können mit einem gemeinsamen Steuergerät verbunden sein, welches Signale an jede Antennenvorrichtung (bestehend aus jeweils einem Paar von Schleifenantennen) senden und von diesen empfangen kann. Mit einer derartigen Gestaltung soll erreicht werden, daß die Anwesenheit eines Transponders (Schlüssels) unabhängig von dessen Lage, also ohne das Auftreten von räumlichen Nullstellen, erreicht wird. Die beschriebene Ausführung wird als relativ aufwendig angesehen.

Ziel der Erfindung war es eine kostengünstige robuste und zuverlässige Antennenanordnung anzugeben, die eine Erkennung des Aufenthaltsortes des Ausweises ermöglicht wobei die jeweilige Erkennung auf den notwendigen Funktionsbereich beschränkt sein muß. Bei Annäherung an das Fahrzeug darf also z.B. nur die Tür oder z.B. nur der Kofferraum zu öffnen sein, ohne den Start des Fahrzeuges zu ermöglichen. Umgekehrt darf z.B. das Öffnen des Kofferraumes nicht erfolgen, wenn der Ausweis im Fahrzeug ist. Entsprechendes kann wahlweise auch für die Beifahrertür oder sogar für die Fahrertür zutreffen, wenn der Benutzer eine Verriegelung von innen wünscht.

Die erfindungsgemäße Antennenanordnung ist in Anspruch 1 definiert. Die Schleifenantennen werden wegen ihres einfachen, kostengünstigen Aufbaus bevorzugt, jedoch können auch andere Antennen verwendet werden. Durch die Anordnung von z.B. drei Außenantennen und einer Innenantenne kann eine hinreichende Differenzierung des Aufenthaltsortes des Ausweises erfolgen.

Die Antennen sind mit einer zentralen elektronischen Baueinheit verbunden, die bevorzugt Filter, elektronische Bauteile bevorzugt zum Senden und Empfangen, zum Multiplexen und Kompensationskondensatoren enthält. Hierdruch kann der zentrale Sende- und Empfangsbaustein für alle Antennen, z.B. in einem Zeitmultiplexverfahren, benutzt werden. Ein weiterer Vorteil ist, daß sich am Ort der Antennen keinerlei elektronische Komponenten wie z.B. eine elektronische Sende- und Empfangsschaltung befindet. Auch der zum Betrieb der Schleifenantenne erforderliche Kompensationskondensator ist innerhalb der zentralen Empfangs- und Sendebaugruppe untergebracht. Diese Anordnung bietet hinsichtlich der Kosten einen wesentlichen Vorteil, da nur eine Sende- und Empfangsbaugruppe benötigt wird. Der Aufwand, der bei der Anordnung elektronischer Komponenten im Spritzwasserbereich notwendig wäre, entfällt. Gleichzeitig steigt die Zuverlässigkeit des Systems.

Die Verbindung der Antennen mit der zentralen Sende- und Empfangsbaugruppe erfolgt über verdrehte, zweiadrige Leitungen und einen Filter zur Unterdrückung der durch Übersprechen auf das ungeschirmte Kabel entstandenen Störungen. Unterdrückt werden auch Störsignale die über die Antenne empfangen werden und oberhalb der Arbeitsfrequenz liegen. Der Transformator wandelt den unsymmetrischen Eingang der nachfolgenden Schaltungen in einen symmetrischen und bewirkt gleichzeitig eine galvanische Entkopplung der Antennen.

Bevorzugt werden zwei der Außenantennen an den Seiten des Fahrzeuges angeord-net und vertikal ausgerichtet. Diese Anordnung insbesondere im Bereich der Tür, z.B. in den Außenspiegeln, und die vertikale Ausrichtung ergibt einen Hauptwirkungsbereich in Richtung der Fahrzeuglängsachse. Hierdurch wird es möglich zu erkennen, ob sich der Ausweis auf der Fahrer- oder Beifahrerseite befindet.

Eine dritte Antenne befindet sich bevorzugt am Heck des Fahrzeuges, insbesondere an bzw. in der Stoßstange und ist in einem Winkel von 45° angeordnet. Der Hauptwirkungsbereich dieser Antenne erstreckt sich daher unter einem Winkel von 45° nach oben vom Fahrzeug fort. Hierdurch wird es möglich zu erkennen, ob sich der Ausweis im Bereich des Kofferraumes befindet. Gleichzeitig wird durch die unterschiedliche Ausrichtung der am Heck und an den Seiten des Fahrzeuges befindlichen Antennen die Differenzierung der Position des Ausweises verbessert.

Die im Innenraum angeordnete Antenne ist in der Konsole des Schalthebels ange-bracht und horizontal ausgerichtet. Dies ergibt einen, bezogen auf die Fahrzeuglängsrichtung, seitensymmetrischen Empfangsbereich der Antenne. Dadurch kann erkannt werden, ob sich der Ausweis im Bereich der Vordersitze, der Tür- oder Instrumentenbrettablagen oder im Fußbereich befindet. Außerdem wird auch erkannt, ob der im Fahrzeug befindliche Benutzer den Ausweis bei sich trägt. Demgegenüber wird ein Ausweis, der sich nur wenige Zentimeter außerhalb des Fahrzeuges befindet, nicht als im Innenraum befindlich erkannt. Damit ist eine zuverlässige Unterscheidung möglich, ob sich der Ausweis im Innenraum oder außerhalb befindet.

Bevorzugt ist die zentrale elektrische Baugruppe mit den für den Zugang benötigten Betätigungselementen verbunden. Falls nur die Türen schlüssellos geöffnet werden sollen, sind die Türgriffe oder entsprechende Schalter oder Sensoren im Bereich der Türen mit der zentralen Baugruppe verbunden. Entsprechendes gilt für die weiteren wesentlichen Zugangsbereiche wie insbesondere die Heckklappe. Grundsätzlich läßt sich die Antennenanordnung bei entsprechender Ausrichtung auf jeden Zugangsbereich am Fahrzeug erweitern.

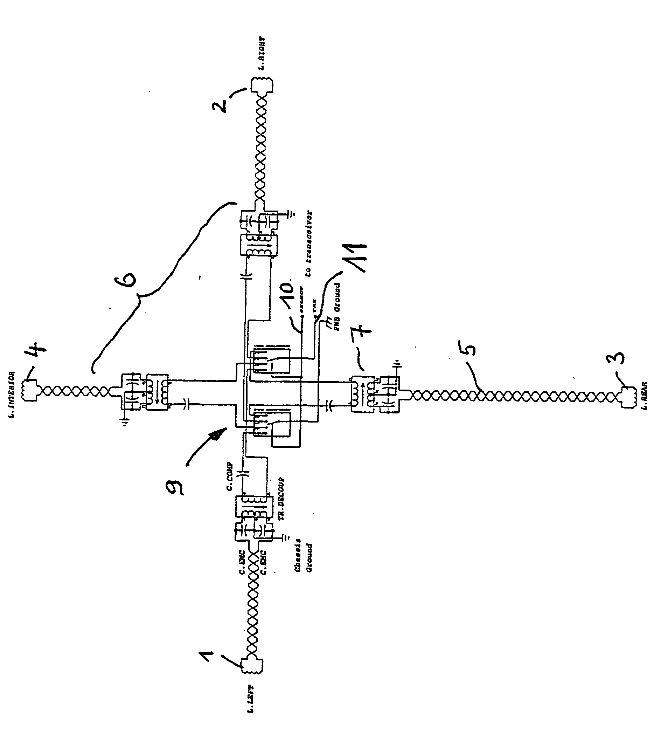

Ein Ausführungsbeispiel wird anhand der beigefügten Abbildung erläutert.

Außen am Fahrzeug sind zwei Schleifenantennen 1, 2 in den Seitenspiegeln angebracht. In der Heckstoßstange ist eine weitere Schleifenantenne 3 angeordnet. Die im Innenraum angeordnete Schleifenantenne 4 befindet sich in der Konsole des Schalthebels. Von den Schleifenantennen 1, 2, 3, 4 führen verdrehte zweiadrige Kabel 5 zu der zentralen Sende- und Empfangsbaugruppe 6. In der zentralen Baugruppe 6 sind Entkopplungskondensatoren 7 und Filter vorgesehen, die mit den Eingängen eines 8-fachen Analogmultiplexers 9 verbunden sind. Der Multiplexer ist mit einer Steuerleitung 10 und einer Sende- und Empfangsleitung 11 verbunden.

## Patentansprüche

1. Antennenanordnung für eine schlüssellose Benutzung eines Fahrzeugs mittels elektronischen Ausweises und Differenzierung des Aufenthaltsortes des Ausweises
a) bei der mehrere Antennen (1, 2, 3, 4) am Fahrzeug angebracht sind
b) und mit einer zentralen Steuerungseinheit verbunden sind,
c) wobei Außenantennen (1, 2, 3) vorhanden sind,
**dadurch gekennzeichnet, dass**
d) jede Außenantenne (1, 2, 3) als eine einfache Schleifenantenne ausgebildet, sowie am Fahrzeug angeordnet ist,
e) die Schleifenantennen (1, 2, 3) mit der Steuereinheit jeweils über verdrehte Kabel (5) galvanisch entkoppelt verbunden sind, dass
f) die Steuerungseinheit pro Antenne (1, 2, 3, 4) mit jeweils einem Entkoppelungstransformator (7) zur galvanischen Entkopplung der Antennen (1, 2, 3, 4) versehen ist, sowie jeweils Kondensatoren (7) enthält,
g) wobei jeweils ein zum Betrieb des jeweiligen Schliefenantenne notwendiger Kompensationskondensator (7) vorhanden ist, und dass die Steuerungseinheit Einrichtungen zum Multiplexen der Antennen (1, 2, 3, 4) enthält.

2. Antennenanordnung nach Anspruch 1,
**dadurch gekennzeichnet, daß**
außerhalb des Fahrzeuges zwei Schleifenantennen an den Seiten angeordnet und vertikal ausgerichtet sind.

3. Antennenanordnung nach Anspruch 1 bis 2,
**dadurch gekennzeichnet, daß**
wenigstens eine Schleifenantenne am Heck des Fahrzeuges unter einem Winkel von 45° angeordnet ist.

4. Antennenanordnung nach Anspruch 1 bis 3,
**dadurch gekennzeichnet, daß**
innerhalb des Fahrzeuges eine Antenne in der Konsole des Schaltknüppels angeordnet und horizontal ausgerichtet ist.

5. Antennenanordnung nach Anspruch 1 bis 4,
**dadurch gekennzeichnet, daß**
die zentrale Sende- und Empfangseinheit mit wenigstens einem Betätigungslement verbunden ist, welches sich an der Fahrzeugaußenseite befindet.

## Claims

1. Antenna array for a keyless use of a vehicle by means of electronic identification and differentiation of the location of the identification,
a) in which a plurality of antennas (1, 2, 3, 4) are mounted on the vehicle,
b) and are connected to a central control unit,
c) external antennas (1, 2, 3) being provided,
**characterized in that**
d) each external antenna (1, 2, 3) is embodied as a simple loop antenna and is arranged on the vehicle,
e) the loop antennas (1, 2, 3) are each connected in an electrically isolated fashion to the control unit via twisted cables (5), **in that**
f) the control unit is provided with in each case one isolating transformer (7) per antenna (1, 2, 3, 4) for electrically isolating the antennas (1, 2, 3, 4), and contains in each case capacitors (7),
g) wherein in each case a compensation capacitor (7) which is necessary to operate the respective loop antenna is present, and **in that** the control unit contains devices for multiplexing the antennas (1, 2, 3, 4).

2. Antenna array according to Claim 1, **characterized in that**, outside the vehicle, two loop antennas are arranged on the sides and are oriented vertically.

3. Antenna array according to Claim 1 or 2, **characterized in that** at least one loop antenna is arranged on the rear of the vehicle at an angle of 45°.

4. Antenna array according to Claims 1 to 3, **characterized in that**, inside the vehicle, an antenna is arranged on the control panel of the gear lever and is oriented horizontally.

5. Antenna array according to Claims 1 to 4, **characterized in that** the central transceiver unit is connected to at least one activation element which is located on the outside of the vehicle.

## Revendications

1. Agencement d'antennes pour l'utilisation d'un véhicule sans clés, au moyen d'une carte d'identité électronique et d'une différentiation de la localisation de la carte d'identité,
a) dans lequel plusieurs antennes (1, 2, 3, 4) sont placées sur le véhicule,
b) et sont connectées à une unité de commande centrale,
c) des antennes extérieures (1, 2, 3) étant prévues,
**caractérisé en ce que**
d) chaque antenne extérieure (1, 2, 3) est réalisée sous la forme d'une simple antenne en boucle et est disposée sur le véhicule,
e) les antennes en boucle (1, 2, 3) sont connectées de manière découplée galvaniquement à l'unité de commande par un câble respectif enroulé (5),
f) **en ce que** l'unité de commande est pourvue pour chaque antenne (1, 2, 3, 4) d'un transformateur de découplage respectif (7) pour le découplage galvanique des antennes (1, 2, 3, 4), et contient aussi des condensateurs respectifs (7),
g) à chaque fois un condensateur de compensation nécessaire pour le fonctionnement de l'antenne en boucle respective étant prévu, et **en ce que** l'unité de commande contient des dispositifs pour le multiplexage des antennes (1, 2, 3, 4).

2. Agencement d'antennes selon la revendication 1,
**caractérisé en ce que**
deux antennes en boucle sont disposées sur les côtés en dehors du véhicule et sont orientées verticalement.

3. Agencement d'antennes selon la revendication 1 ou 2,
**caractérisé en ce qu'**
au moins une antenne en boucle est disposée suivant un angle de 45° à l'arrière du véhicule.

4. Agencement d'antennes selon l'une quelconque des revendications 1 à 3,
**caractérisé en ce qu'**
une antenne est disposée à l'intérieur du véhicule dans la console de la manette de commande et est orientée horizontalement.

5. Agencement d'antennes selon l'une quelconque des revendications 1 à 4,
**caractérisé en ce que**
l'unité centrale d'émission et de réception est connectée à au moins un élément de commande qui se trouve sur le côté extérieur du véhicule.
